# FASCICULE DE BREVET EUROPEEN

(11) **EP 1 023 701 B1**
(45) Date de publication et mention de la délivrance du brevet: **28.11.2001**
(21) Numéro de dépôt: 98908185.6
(22) Date de dépôt: 13.02.1998
(51) Int. Cl.: G07F 7/10

(54) **PROCEDE DE STOCKAGE DE DONNEES DANS UNE MEMOIRE REINSCRIPTIBLE DE CARTE A PUCE**
VERFAHREN ZUM SPEICHERN VON DATEN IN EINEN WIEDERBESCHREIBAREN SPEICHER EINER CHIPKARTE
METHOD FOR STORING DATA IN A CHIP CARD REWRITABLE MEMORY

(30) Priorité: 14.02.1997 FR 9701735
(43) Date de publication de la demande: 02.08.2000
(73) Titulaire: OBERTHUR CARD SYSTEMS SA, 75017 Paris (FR)
(72) Inventeur: DEVAUX, François-Thomson-CSF S.C.P.I., F-94117 Arcueil Cedex (FR); PERROT, Daniel-Thomson-CSF S.C.P.I., F-94117 Arcueil Cedex (FR)
(74) Mandataire: Guérin, Michel
(86) Numéro de dépôt international: FR9800279
(87) Numéro de publication internationale: WO9836387

(56) Documents cités:
- EP-A- 0 446 940
- EP-A- 0 622 736
- US-A- 5 365 045

## Description

La présente invention concerne le stockage de données dans une carte à puce à microprocesseur.

Les cartes à puce sont généralement des cartes du format d'une carte de crédit ou des jetons munis d'un microcircuit électronique, à base de mémoires et d'un microcontrôleur, agencés pour permettre le déroulement d'une transaction, par exemple bancaire ou de santé. Elles communiquent avec leur environnement au moyen de lecteurs avec lesquels elles échangent des messages et répondent à une norme ISO 7816-4. Pour assurer le déroulement d'une transaction, elles ont besoin de conserver et de mettre à jour un certain nombre d'informations dans une mémoire embarquée reprogrammable dite EEPROM (Electrically Erasable Programmable Read Only Memory en langue anglo-saxonne).

Jusqu'à présent, le stockage de données dans l'EEPROM d'une carte à puce est organisé par la norme ISO 7816-4 en trois niveaux de fichiers :
- un premier niveau dit fichier principal (Main File en langue anglo-saxonne) constitué de la partie accessible de l'espace de la mémoire EEPROM, pourvu d'un en-tête de définition et d'en-têtes de repérage des fichiers de deuxième niveau qu'il contient;
- un deuxième niveau de fichiers répertoire (Dedicated File en langue anglo-saxonne) pourvus chacun d'un en-tête de définition et d'en-têtes de repérage des fichiers de troisième niveau qu'il contient, et
- un troisième niveau de fichiers dit élémentaires (Elementary File en langue anglo-saxonne) qui sont de deux types : soit de type transparent (Transparent File en langue anglo-saxonne), les données des enregistrements n'étant pas structurées au sein du fichier, l'adressage en écriture et lecture étant laissé à la charge du programme applicatif contrôlant la transaction se déroulant dans la carte à puce, soit de type enregistrement (Record File en langue anglo-saxonne), les données étant stockées par blocs de tailles fixes gérés par le système d'exploitation (Operating System en langue anglo-saxonne) du microcontroleur de la carte à puce.

Avec un système de stockage de données en mémoire EEPROM de carte à puce tel qu'il est régi par la norme ISO 7816-4, le programme applicatif contrôlant la transaction se déroulant dans la carte à puce doit connaître les tailles des blocs de données qu'il se propose de mémoriser dans la mémoire EEPROM de la carte à puce car les deux types de fichiers élémentaires admis, où sont effectivement stockées les données, sont de longueurs fixes. Cette limitation empêche de recourir à la compression de données au sein de la carte à puce, car, dans ce cas, le programme applicatif contrôlant la transaction se déroulant dans la carte à puce ne maîtrise plus la longueur des blocs de données après compression qui seront effectivement mémorisés. (EP-A-0 622 736).

La présente invention a pour but d'éviter cette limitation en créant un nouveau type de fichier de troisième niveau dit fichier élémentaire de longueur variable (Record Variable File en langue anglo-saxonne) géré par des instructions propriétaires de la norme ISO 7816-4, cela pour garder une compatibilité ascendante avec cette norme.

Elle a pour objet un procédé de stockage de données dans une mémoire réinscriptible de carte à puce consistant à stocker les données au moins en partie, dans des fichiers élémentaires de longueurs variables composés chacun d'une chaîne de longueur variable de domaines de longueurs fixes et de faibles capacités individuelles de la mémoire réinscriptible, ladite chaîne ayant ses domaines repérés au moyen d'une table d'allocation de domaines évoluant en fonction du nombre de données effectivement stockées.

Avantageusement, lesdits fichiers élémentaires d'enregistrements de longueurs variables font partie de fichiers répertoire plus grands, de type variable, contenant leurs tables d'allocation de domaines qui sont constituées chacune d'un en-tête placé dans une zone de gestion du fichier répertoire hôte et localisant le début de chaîne, et de liens placés en début ou en fin de chaque domaine identifiant l'appartenance du domaine concerné à une chaîne, c'est-à-dire son occupation, et localisant le domaine suivant dans la chaîne.

Avantageusement, lesdits fichiers élémentaires de longueurs variables cohabitent avec des fichiers élémentaires de longueurs fixes au sein de fichiers répertoire distincts et sont gérés par un système d'exploitation répondant à des commandes constituées de plusieurs champs successifs : un champ de classes d'instructions, un champs d'instructions et un champ de paramètres, la classe d'instructions permettant de distinguer un fichier répertoire de type variable contenant des fichiers de longueurs variables, des fichiers répertoire de type fixe contenant des fichiers de longueurs fixes afin que chaque fichier élémentaire soit géré selon son genre, par le système d'exploitation soit seul, soit sous la dépendance d'un programme applicatif intervenant à un niveau supérieur.

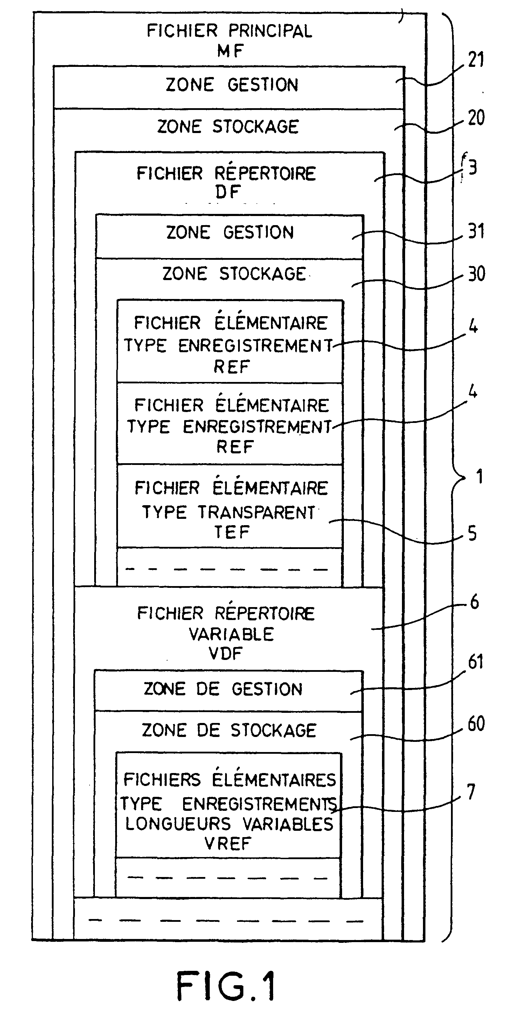

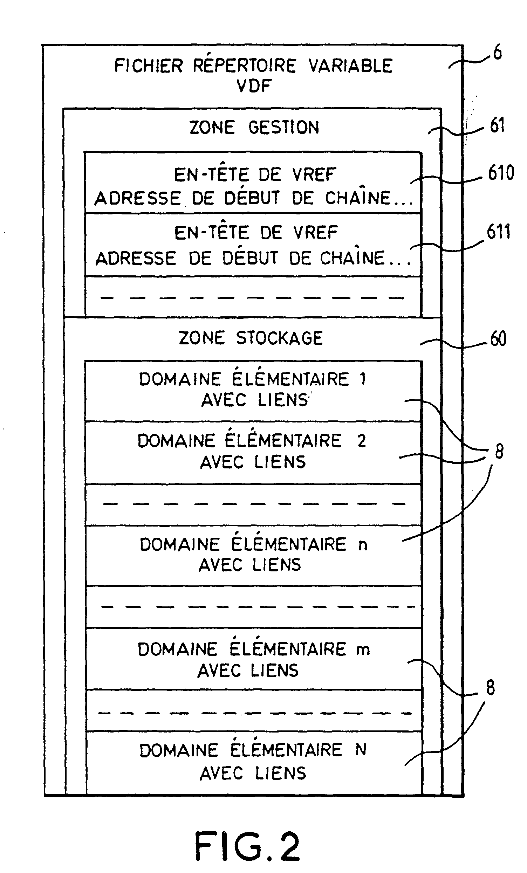

D'autres caractéristiques et avantages de l'invention ressortiront de la description ci-après d'un mode de réalisation donné à titre d'exemple. Cette description sera faite en regard du dessin dans lequel :
- une figure 1 illustre de manière schématique un plan d'occupation d'une mémoire morte réinscriptible de carte à puce tel qu'il résulte d'un procédé de stockage de données sur carte à puce selon l'invention, compatible de manière ascendante avec la norme ISO 7816-4, et
- une figure 2 détaille la constitution d'un fichier répertoire de type variable apparaissant dans la figure 1.

Selon la norme ISO 7816-4, le stockage de données dans une mémoire réinscriptible de type EEPROM de carte à puce se fait à l'aide d'un système de fichiers organisé en trois niveaux :
- un premier niveau constitué d'un fichier principal "Main File MF" 2 occupant toute la partie accessible 1 de l'espace mémoire de la mémoire EEPROM avec une zone de stockage 20 complétée par une zone de gestion 21,
- un deuxième niveau de fichiers répertoire "Dedicated file DF" 3 avec également une zone de stockage 30 complétée par une zone de gestion 31. Ces fichiers répertoire DF 3 occupent la zone de stockage 20 du fichier principal MF 2 avec, dans la zone de gestion 21 du fichier principal 2, des en-têtes répertoriant et situant les fichiers répertoire DF 3 au sein du fichier principal 2 (adresses des débuts de fichiers répertoire, tailles des fichiers de répertoire, etc.), et
- un troisième niveau de fichiers élémentaires "Elementary File EF" 4, 5 occupant les zones de stockage 30 des fichiers répertoire DF 3 avec, dans la zone de gestion 31 des fichiers répertoire DF 3 qui les hébergent, des en-têtes répertoriant et situant les fichiers élémentaires EF 4, 5 au sein des fichiers répertoire DF 3 (types des fichiers élémentaires, adresses des débuts des fichiers élémentaires EF 4, 5, tailles des fichiers élémentaires, etc.).

Toujours selon la norme ISO 7816-4, les fichiers élémentaires sont de deux types : les fichiers élémentaires de tailles fixes dits d'enregistrement "Record EF" 4 dans lesquels les données sont stockées par blocs de tailles fixes et les fichiers élémentaires dit transparents "Transparent EF" 5 également de tailles fixes, dans lesquels les données ne sont pas structurées, l'adressage relatif en écriture et lecture étant laissé à la charge du programme applicatif contrôlant le déroulement d'une transaction dans la carte à puce.

Avec un tel système de stockage ne comportant que des fichiers élémentaires de type d'enregistrement 4 ou transparent 5, le programme applicatif contrôlant le déroulement d'une transaction à l'aide d'une carte à puce doit connaître la longueur des blocs de données à stocker dans la carte. Cela ôte tout intérêt aux traitements de compression de données mis en oeuvre au niveau inférieur du système d'exploitation car le programme applicatif contrôlant le déroulement d'une transaction ignore le résultat d'une compression au niveau du système d'exploitation et ne peut en tenir compte pour économiser de la place lors des inscriptions en mémoire dans la carte à puce. Pourtant, la compression de données au niveau du système d'exploitation semble particulièrement indiquée pour une carte à puce en raison des limitations des capacités de stockage de données de cette dernière. Pour remédier à cette limitation, on propose de créer un nouveau type de fichier élémentaire de longueur variable et de l'ajouter aux types de fichiers élémentaires existants de longueurs fixes tout en continuant à respecter la norme ISO 7816-4 pour maintenir une compatibilité ascendante entre cartes à puce.

Le nouveau type de fichier élémentaire de longueur variable VREF 7 est basé sur la constitution d'une chaîne de longueur variable de domaines élémentaires 8 de faible capacité unitaire et de longueurs fixes se partageant la zone de stockage 60 d'un fichier répertoire 6 d'un nouveau type dit fichier répertoire variable VDF 6 créé pour l'occasion, dont la structure est détaillée à la figure 2.

Ce fichier répertoire variable VDF 6 est distingué des fichiers répertoire classiques DF 3 par un identificateur spécifique inscrit dans l'en-tête qui lui est réservé dans la zone de gestion 21 du fichier principal MF 2. Il présente, comme les fichiers répertoire classiques DF 3 une zone de stockage 60 complétée par une zone de gestion 61.

La zone de stockage 60 d'un fichier répertoire variable VDF 6 est partagée en domaines élémentaires 8 de même longueur et de faible capacité et peut contenir un nombre variable de fichiers de longueurs variables VREF 7. Ces domaines élémentaires, par exemple des multiples de 16 octets, présentent, en début ou en fin, une plage de un ou deux octets exclue du stockage de données et réservée à des liens destinés au chaînage. Ces liens donnent l'état d'occupation ou de non-occupation de chaque domaine élémentaire ainsi que l'adresse du domaine élémentaire suivant, lorsque le domaine élémentaire considéré fait partie d'une chaîne formant un fichier élémentaire de longueur variable VREF 7 et qu'il n'est pas le dernier de la chaîne, le domaine élémentaire suivant n'étant pas nécessairement contiguë. Les liens d'un domaine élémentaire sont constitués, par exemple, par un nombre prenant la valeur 0 pour signifier la non-occupation du domaine considéré, la valeur d'une adresse de domaine repérant le prochain domaine avec lequel le domaine considéré est chaîné, ou une valeur particulière supérieure aux adresses des domaines signifiant la fin d'une chaîne.

La zone de gestion 61 d'un fichier répertoire variable VDF 6 contient des en-têtes 610, 611 de fichiers élémentaires de longueurs variables VREF 7 renfermant principalement l'adresse de début de la chaîne de domaines élémentaires 8 de la zone de stockage 60 affectée au fichier élémentaire de longueur variable considéré.

La création d'un fichier répertoire variable VDF 6 se manifeste par :
- l'écriture dans la zone de gestion 21 du fichier principal MF 2 d'un en-tête affecté à ce fichier répertoire variable, l'identifiant et lui réservant un certain emplacement dans la zone de stockage 20 du fichier principal MF 2. Cet entête est celui décrit par la norme ISO 7816-4 mais son type devient type DF variable,
- le partage de l'emplacement réservé en une zone de gestion 61 et une zone de stockage 60,
- l'inscription dans la nouvelle zone de gestion crée 61 d'un certain nombre de caractéristiques du nouveau fichier répertoire variable dont la taille du répertoire des en-têtes de fichiers élémentaires de longueurs variables, un indicateur global d'effacement, la taille de ses domaines élémentaires, l'adresse du premier domaine élémentaire, etc., et
- le formatage en domaines élémentaires de la nouvelle zone de stockage 60 avec initialisation des liens.

Une fois qu'un fichier répertoire variable VDF 6 existe, la création d'un fichier élémentaire de longueur variable se manifeste par :
- l'identification du fichier par affectation d'un en-tête dans la zone de gestion 61 du fichier répertoire variable VDF 6 considéré, avec un identifiant "id-file" normalisé ISO 7816-4 et le repérage du premier domaine élémentaire libre trouvé dans la zone de stockage en vue de lui être affecté, le positionnement d'un indicateur d'effacement et
- l'écriture des données affectées au fichier en commençant par le premier domaine élémentaire libre repéré puis en débordant sur d'autres domaines libres jusqu'à épuisement des données à inscrire, avec, à chaque saut de domaine élémentaire, l'inscription dans les liens du domaine élémentaire que l'on vient de quitter de l'adresse du suivant et la mise à jour dans les liens du domaine élémentaire suivant de l'identificateur d'occupation.

On crée ainsi un fichier élémentaire de longueur variable de longueur adaptée à chaque fois, à la quantité précise de données à stocker par une mise en chaîne plus ou moins longue de domaines élémentaires de faibles capacités.

Dans le cas d'un fichier classique REF ou TEF de longueur fixe, le nombre d'enregistrements, c'est-à-dire d'écritures partielles du fichier est fixé une fois pour toutes, la création du fichier impliquant la réservation d'une capacité mémoire non nécessairement utilisée immédiatement qui devient indisponible pour la création d'autres fichiers. Ce n'est plus le cas avec un fichier de longueur variable VREF qui n'occupe que la capacité mémoire strictement nécessaire aux enregistrements qu'il renferme et qui laisse libre la mémoire inutilisée pour d'autres fichiers.

La gestion des fichiers élémentaires transparents TEF 5, d'enregistrements classiques REF 4 ou à longueurs variables VREF 7, c'est-à-dire leurs créations, inscriptions, lectures, effacements, suppressions, se fait, de manière classique au moyen de routines du système d'exploitation du microcontrôleur de la carte à puce appelées par l'intermédiaire de l'interpréteur de commandes du système d'exploitation au moyen de commandes respectant le formalisme de la norme ISO 7816-4, c'est-à-dire avec une écriture composée de plusieurs champs successifs : un champ de classes d'instructions, un champ d'instructions et un champ de paramètres. De préférence, on utilise les commandes habituelles de la norme ISO 7816-4 pour la gestion des fichiers élémentaires transparents TEF et d'enregistrement REF, et les mêmes commandes avec un champ de classe d'instructions propriétaire pour les fichiers élémentaires de longueurs variables. Grâce à cela, on obtient une compatibilité ascendante avec les cartes à puce respectant la norme ISO 7816-4 et ne connaissant que les deux types habituels de fichiers élémentaires que sont les fichiers élémentaires transparents TEF et les fichiers élémentaires d'enregistrement REF.

Bien évidemment, l'écriture ou l'effacement d'un fichier élémentaire de longueur variable respecte les règles de sécurité habituelles.

Une création de fichier ou une écriture n'est réalisée que s'il y a la place nécessaire à l'action à faire. Une écriture commencée doit se terminer pour être validée. Cela s'obtient, conformément à la norme 7816-4 au moyen d'un bit auxiliaire d'activité placé dans l'en-tête concernant le fichier, mis à un avant l'action envisagée et remis à zéro après la fin de l'action. Si le bit d'activité est maintenu à un après une action, le fichier est déclaré invalide et l'on ne peut plus y accéder. Enfin une taille maximale d'enregistrement est prévue dans la zone de gestion du fichier répertoire variable hôte VDF de manière à surveiller les transferts de données.

De la même façon, un effacement commencé doit être achevé pour être validé. Cela s'obtient au moyen d'un bit d'effacement placé dans l'en-tête concernant le fichier, mis à un avant l'effacement qui consiste à réinitialiser les liens des domaines élémentaires appartenant à la chaîne constituant le fichier, puis remis à zéro en fin d'action juste avant la suppression de l'en-tête de fichier. Si une action d'effacement de fichier est interrompue par retrait inopportun de la carte à puce de son lecteur, le bit d'effacement le signale et permet l'achèvement de l'action interrompue d'effacement en préalable à toute utilisation ultérieure de la carte à puce.

Bien évidement, l'invention n'est pas limitée au mode de réalisation décrit mais s'étend à toutes les variantes qui sont à la portée de l'homme du métier. Les liens des domaines élémentaires qui constituent une sorte de table d'allocation des domaines peuvent être déportés en dehors de la zone de stockage du fichier répertoire de type variable hôte et réunis dans une plage de la zone de gestion de ce dernier.

## Revendications

1. Procédé de stockage de données dans une mémoire réinscriptible de carte à puce **caractérisé en ce qu'**il consiste à stocker les données au moins en partie, dans des fichiers élémentaires de longueurs variables (7) composés chacun d'une chaîne de longueur variable de domaines de longueurs fixes (8) et de faibles capacités individuelles de la mémoire réinscriptible, ladite chaîne ayant ses domaines (8) repérés au moyen d'une table d'allocation de domaines évoluant en fonction du nombre des données effectivement stockées.

2. Procédé selon la revendication 1, **caractérisé en ce que** les fichiers élémentaires de longueurs variables (7) sont localisés dans la mémoire réinscriptible au sein de fichiers répertoire plus grands, de type variable (6) contenant leurs domaines (8) et leurs tables d'allocation de domaines.

3. Procédé selon la revendication 2, **caractérisé en ce qu'**une table d'allocation de domaines comporte un en-tête (610) placé dans une zone de gestion (61) du fichier répertoire variable (6) hôte localisant l'adresse du domaine (8) de début de chaîne dans le fichier répertoire variable (6) hôte, et des liens placés dans des emplacements réservés dans chaque domaine du fichier répertoire variable (6) hôte identifiant l'appartenance de chaque domaine à une chaîne.

4. Procédé selon la revendication 1, **caractérisé en ce que** lesdits domaines (8) ont une capacité égale ou multiple de 16 octets.

5. Procédé selon la revendication 3, **caractérisé en ce que** lesdits liens occupent entre un et deux octets dans chaque domaine (8).

6. Procédé selon la revendication 3, **caractérisé en ce que** lesdits liens d'un domaine (8) renferment un nombre prenant la valeur 0 pour signifier la non occupation du domaine considéré, la valeur d'une adresse de domaine repérant le prochain domaine avec lequel le domaine considéré est chaîné, ou une valeur particulière supérieure aux adresses des domaines signifiant la fin d'une chaîne.

7. Procédé selon la revendication 1, **caractérisé en ce que** la gestion des dits fichiers élémentaires de longueurs variables se fait au moyen de routines d'un système d'exploitation appelées par l'intermédiaire de commandes spécifiques comprises par l'interpréteur de commandes dudit système d'exploitation et reprenant dans leurs formulations un champ de classe d'instructions, un champ d'instructions et un champ de paramètres.

8. Procédé selon la revendication 1, **caractérisé en ce qu'**il consiste à stocker les données en partie, dans des fichiers élémentaires de longueurs variables (7) composés chacun d'une chaîne de longueur variable de domaines de longueurs fixes (8) et de faibles capacités de la mémoire réinscriptible, ladite chaîne ayant ses domaines (8) repérés au moyen d'une table d'allocation de domaines évoluant en fonction des variations du nombre de données effectivement stockées, et en partie dans des fichiers élémentaires de longueurs fixes (4, 5).

9. Procédé selon la revendication 8, **caractérisé en ce que** les fichiers élémentaires de longueurs variables (7) et les fichiers élémentaires de longueurs fixes (4, 5) sont localisés dans la mémoire réinscriptible dans des fichiers répertoire distincts (3, 6) de plus grandes capacités, des fichiers répertoire variables (6) contenant les domaines (8) et les tables d'allocation de domaines des fichiers élémentaires de longueurs variables et des fichiers répertoire fixes (3) contenant les fichiers élémentaires de longueurs fixes (4, 5) et des en-têtes identifiant les fichiers élémentaires de longueurs fixes par les adresses de leurs débuts et par les mentions de leurs capacités.

## Patentansprüche

1. Verfahren zur Speicherung von Daten in einem wiederbeschreibbaren Speicher einer Chipkarte, **dadurch gekennzeichnet, daß** es darin besteht, die Daten zumindest teilweise in Elementardateien variabler Länge (7) zu speichern, die je aus einer Kette variabler Länge von Bereichen fester Länge (8) und kleiner Einzelkapazität im wiederbeschreibbaren Speicher bestehen, wobei die Bereiche (8) der Kette mithilfe einer Allokationstabelle von Bereichen erkannt wird, die von der Menge der tatsächlich gespeicherten Daten abhängt.

2. Verfahren nach Anspruch 1, **dadurch gekennzeichnet, daß** die Elementardateien variabler Länge (7) in dem wiederbeschreibbaren Speicher in größeren Repertoire-Dateien (6) variablen Typs lokalisiert sind, die ihre Bereiche (8) und ihre Bereichs-Allokationstabellen enthalten.

3. Verfahren nach Anspruch 2, **dadurch gekennzeichnet, daß** eine Bereichs-Allokationstabelle einen Vorspann (610) enthält, der in einer Verwaltungszone (61) der variablen Wirts-Repertoire-Datei (6) liegt, welche die Adresse des Bereichs (8) am Beginn der Kette in der Wirts-Repertoire-Datei (6) sowie Links lokalisiert, die in in jedem Bereich der variablen Wirts-Repertoire-Datei (6) reservierten Speicherstellen liegen und die Zugehörigkeit jedes Bereichs zu einer Kette identifizieren.

4. Verfahren nach Anspruch 1, **dadurch gekennzeichnet, daß** die Bereiche (8) eine Kapazität von 16 Bytes oder einem Vielfachen davon besitzen.

5. Verfahren nach Anspruch 3, **dadurch gekennzeichnet, daß** die Links zwischen einem und zwei Bytes in jedem Bereich (8) besetzen.

6. Verfahren nach Anspruch 3, **dadurch gekennzeichnet, daß** die Links eines Bereichs (8) den Wert NULL annehmen, um die Nicht-Belegung des betreffenden Bereichs anzuzeigen, oder einen Wert einer Bereichsadresse, die den nächsten Bereich bezeichnet, mit dem der betreffende Bereich verkettet ist, oder einen besonderen, höheren Wert als die Adressen der Bereiche, der das Ende einer Kette bezeichnet.

7. Verfahren nach Anspruch 1, **dadurch gekennzeichnet, daß** die Verwaltung der Elementardateien variabler Länge mithilfe von Routinen eines Betriebssystems erfolgt, die über spezifische von Steuerübersetzern des Betriebssystems verstandene Steuerungen aufgerufen werden und in ihren Formulierungen ein Feld von Befehlsklassen, ein Feld von Befehlen und ein Feld von Parametern enthalten.

8. Verfahren nach Anspruch 1, **dadurch gekennzeichnet, daß** es darin besteht, die Daten teilweise in Elementardateien variabler Länge (7) zu speichern, die je aus einer Kette variabler Länge von Bereichen fester Länge und kleiner Kapazität im wiederbeschreibbaren Speicher gebildet werden, wobei die Bereiche (8) der Kette mithilfe einer Allokationstabelle für Bereiche bezeichnet werden, die von den Veränderungen der Anzahl von tatsächlich gespeicherten Daten abhängt, und teilweise in Elementardateien (4, 5) fester Länge zu speichern.

9. Verfahren nach Anspruch 8, **dadurch gekennzeichnet, daß** die Elementardateien variabler Länge (7) und die Elementardateien fester Länge (4, 5) in dem wiederbeschreibbaren Speicher in eigenen Repertoire-Dateien (3, 6) größerer Kapazität lokalisiert sind, wobei variable Repertoire-Dateien (6) die Bereiche (8) und Allokationstabellen von Bereichen der Elementardateien variabler Länge und feste Repertoire-Dateien (3) die Elementardateien fester Länge (4, 5) sowie Vorspanneinheiten enthalten, die die Elementardateien fester Länge durch die Adressen ihres Beginns und durch die Erwähnung ihrer Kapazitäten identifizieren.

## Claims

1. Process for storing data in a rewritable smartcard memory, **characterized in that** it consists in storing the data at least in part in elementary files of variable lengths (7) each made up of a variable-length chain of domains of fixed lengths (8) and of low individual capacities of the rewritable memory, the said chain having its domains (8) tagged by means of a domain allocation table which changes as a function of the number of data items actually stored.

2. Process according to Claim 1, **characterized in that** the elementary files of variable lengths (7) are located in the rewritable memory within larger directory files of variable type (6) containing their domains (8) and their domain allocation tables.

3. Process according to Claim 2, **characterized in that** a domain allocation table comprises a header (610) placed in a management area (61) of the host variable directory file (6) locating the address of the start-of-chain domain (8) in the host variable directory file (6), and links placed in locations reserved in each domain of the host variable directory file (6) identifying each domain's membership of a chain.

4. Process according to Claim 1, **characterized in that** the said domains (8) have a capacity which is equal or a multiple of 16 bytes.

5. Process according to Claim 3, **characterized in that** the said links occupy between one and two bytes in each domain (8).

6. Process according to Claim 3, **characterized in that** the said links of a domain (8) incorporate a number taking the value 0 to signify the non-occupancy of the relevant domain, the value of a domain address tagging the next domain with which the relevant domain is chained, or a particular value greater than the addresses of the domains signifying the end of a chain.

7. Process according to Claim 1, **characterized in that** the management of the said elementary files of variable lengths is carried out by means of routines of an operating system which are called by way of specific commands which are understood by the command interpreter of the said operating system and employ within their formulations an instruction class field, an instruction field and a parameter field.

8. Process according to Claim 1, **characterized in that** it consists in storing the data in part in elementary files of variable lengths (7) each made up of a variable-length chain of domains of fixed lengths (8) and of low capacities of the rewritable memory, the said chain having its domains (8) tagged by means of a domain allocation table which changes as a function of the variations in the number of data items actually stored, and in part in elementary files of fixed lengths (4, 5).

9. Process according to Claim 8, **characterized in that** the elementary files of variable lengths (7) and the elementary files of fixed lengths (4, 5) are located in the rewritable memory in distinct directory files (3, 6) of larger capacities, variable directory files (6) containing the domains (8) and the tables for allocating domains of the elementary files of variable lengths and fixed directory files (3) containing the elementary files of fixed lengths (4, 5) and headers identifying the elementary files of fixed lengths by their start addresses and by the indications of their capacities.
